# EUROPEAN PATENT APPLICATION

(11) **EP 2 574 518 A1**
(43) Date of publication of application: **03.04.2013**
(21) Application number: 11183385.1
(22) Date of filing: 30.09.2011
(51) Int. Cl.: B61D 37/00

(54) **Arrangement and method for fastening planar object to vehicle**

(71) Applicant: Promeco Group Oy, 38700 Kankaanpää (FI)
(72) Inventor: Öysti, Riku, 61300 Kurikka (FI)
(74) Representative: Niemi, Hakan Henrik

(57) **Abstract**

The present invention relates to an arrangement for installing a fixture (1) in a vehicle, in particular, in a passenger cabin of the vehicle. This fixture comprises a planar object (5), whose inner end (6) is connected to a side wall (3) defining the cabin substantially in the travel direction of the vehicle with an installation means (10), which is arranged substantially below said planar object, being connected, on one hand, to the planar object and, on the other hand, to the side wall frame structure (11). This installation means comprises at least one guide means (17) that is arranged substantially immobile in relation to the side wall and communicates operationally with at least one vertical support (13, 14) through slide means interconnecting them such that the force (F) acting on the planar object and exceeding a predetermined limit value is arranged to make the vertical supports bend in the longitudinal direction of the vehicle.

## Description

### Background of the invention

The present invention relates to an arrangement in accordance with the preamble of claim 1 for fastening a planar object to a vehicle.

The arrangement comprises an installation means by which the planar object is positioned, in particular, between two opposing seats or seat sets.

The invention also relates to a method in accordance with the preamble of claim 14 for controlling deformation caused by a force acting on a fixture.

It is previously known per se to fasten a planar object to a side wall of a vehicle. In many arrangements this is implemented in a lightweight manner such that the planar object may be lifted up or collapsed against the side wall when not in use. The solution of the utility model publication DE 201 04 240 may be given as an example of this.

On the other hand, there are known solutions, in which a planar object is fastened more or less immovably to the structures of a vehicle in order to better resist the forces acting thereon. However, a fastening solution of this kind involves a security problem, when it is used in vehicles having high speeds and, thus, in a collision the forces exerted on a fixture are significant. In order to reduce a risk of injuries by the planar object to passengers, in particular in accident situations, the planar objects or fastening arrangements thereof have been rendered deformable. Consequently, an external force exerted on the planar object, for instance, the weight of a passenger impacting against the fixture in a case of accident, is to be counteracted by providing at least momentary deformation in table structures. This type of solution is disclosed in patent publication WO 2011/009679, for instance.

It has been found, however, that current solutions involve problems unsolved so far. In many cases, while developing a solution it is necessary to balance between the degree of yield and the rigidity of fastening of the planar object. On the other hand, the path of the planar object in an accident poses problems. When the fastening of the planar object is excessively rigid, the table is not able to deform sufficiently in an accident, and as a result the passenger impacting it will be seriously injured. Excessively rigid fastening may also cause the planar object to bounce back to its original position, which may also cause injuries to a passenger. On the other hand, if the fastening of the table is excessively flexible, it makes the planar object move towards the passenger(s) sitting on the other side of the planar object, and as a result this passenger, in turn, will be injured.

### Brief description of the invention

The object of the present invention is to provide an arrangement that solves the above-described prior art problems in a more reliable manner.

This is achieved by the arrangement for fastening a planar object to a vehicle and the method for controlling deformation caused by a force exerted on a fixture, in accordance with the present invention, having the characteristics defined in the claims. In particular, the present problems may be solved by combining the characteristics as disclosed in the characterizing part of claim 1 and, on the other hand, as disclosed in the characterizing part of claim 14. Preferred embodiments of the invention are disclosed in the dependent claims.

The invention is based on the idea that by directing and discharging forces exerted on a fixture, and especially on its planar object, to an installation means used in the fastening of the planar object the motion geometry of the table may be controlled better than before.

The terms "above", "below", and so forth used in the specification illustrate the features of the invention in the directions that are relative to the arrangement and the method of the invention as presented in the attached figures.

Considerable advantages are achieved by the arrangement and the method of the invention. So, this arrangement does not require any such installation work stages that would significantly increase installation costs. The arrangement is also sufficiently strong to resist without problems the forces acting thereon in normal use conditions.

In the tests conducted it was found, however, that in accidents the operation of the invention is superior. By the effect of a force the installation means of the planar object deforms controllably and, at the same time, guides an edge of the planar object opposite the acting force to yield controllably. In this manner it is possible to avoid injuries caused both to a passenger impacting the fixture and to a passenger sitting opposite.

In particular, guide-groove-type slide means of the installation means direct the force exerted on the fixture such that the planar object substantially retains the linear motion parallel to its original position.

A structure of these guide grooves tapering in the direction of forces also transforms effectively the energy contained in this force into deformation of the installation means and kinetic friction. Because internal friction in the installation means comprised by the guide groove and a slide pin increases at the same time, the planar object's possibility to bounce back towards its original position is also reduced.

It may be stated that by varying the geometric position of the guide groove in relation to the direction of the force exerted and the size of said guide groove it is possible to transform the torque applied to the fixture into a simple linear movement and at the same time one manages to control the speed and degree of absorption of the force exerted on the fixture accurately.

Other advantages of the invention are presented in the following in connection with a more detailed description of special embodiments of the invention.

### Brief description of figures

In the following, some preferred embodiments of the invention are explained in closer detail with reference to the accompanying drawing, in which
Figure 1 shows schematically installation of a table constituting a fixture in a passenger cabin of a vehicle,
Figure 2 is a side view of the table of Figure 1 without seat sets,
Figure 3 shows an installation means to be used in the fastening of the planar object of the table, seen in the direction from a side wall,
Figure 4 shows how the installation means behaves in an accident, seen in the direction of the side wall,
Figure 5 shows a detail of guide grooves according to the installation means,
Figure 6 shows the installation means, seen in the direction of the side wall,
Figure 7 is a top view of the installation means, illustrating, i.a. their geometry in relation to a designing point of force,
Figure 8 is a side view of the installation means,
Figure 9 shows the installation means in the direction from the side wall, and
Figure 10 shows an alternative embodiment of the installation means in the direction from the side wall.

### Detailed description of a preferred embodiment

In the present figures the arrangement for fastening a planar object to a vehicle and the method for controlling deformation caused by a force exerted on a fixture are not shown to scale, but the figures are schematic, illustrating the structure and operation of the preferred embodiments in principle. The structural parts indicated by reference numerals in the figures correspond to the structural parts marked with reference numerals in this specification.

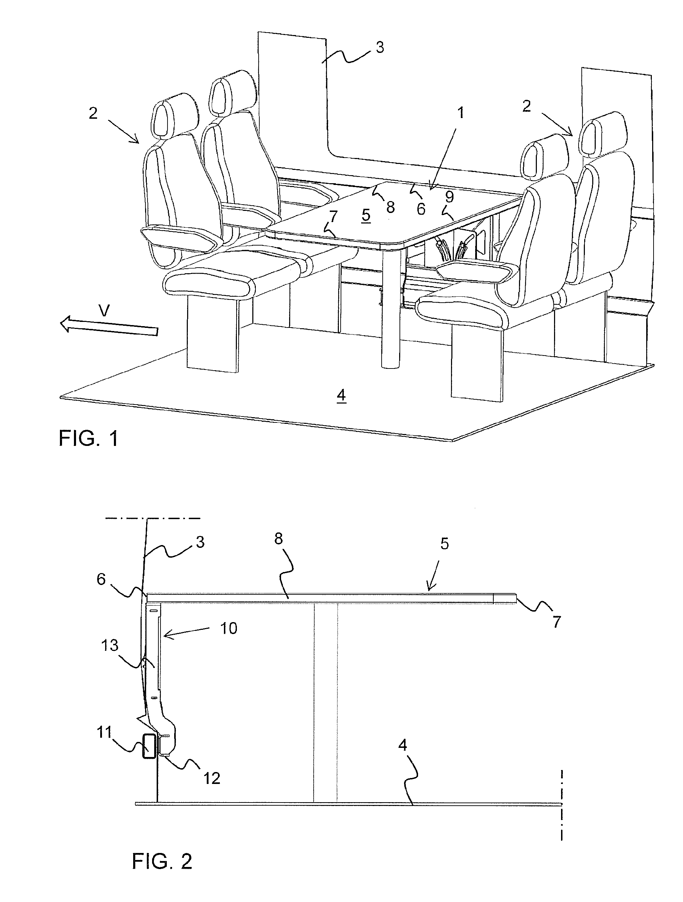

As appears from Figure 1, the present solution relates to an arrangement by which a fixture 1, such as a table, is installed to a vehicle known per se. This installation is carried out, in particular, in a passenger cabin of a vehicle and it protrudes transversally to the travel direction V of the vehicle. In the representation of Figure 2 said travel direction is thus perpendicular to the drawing plane. The table of the present embodiment is thus arranged in connection with one or more sets of seats 2 protruding likewise transversally to the travel direction of the vehicle. For the sake of simplicity, of the structures defining the passenger cabin there are only shown part of a side wall 3 and part of a floor 4. Even though the particular embodiment of the solution in the figures relates to an implementation in a railway car, nothing prevents the solution from being utilized in any other vehicle, where necessary frame structures that enable installation work can be found and where, on the other hand, there is a need to reduce the risk of accident-related injuries which could be caused by a table or another fixture installed in the vehicle.

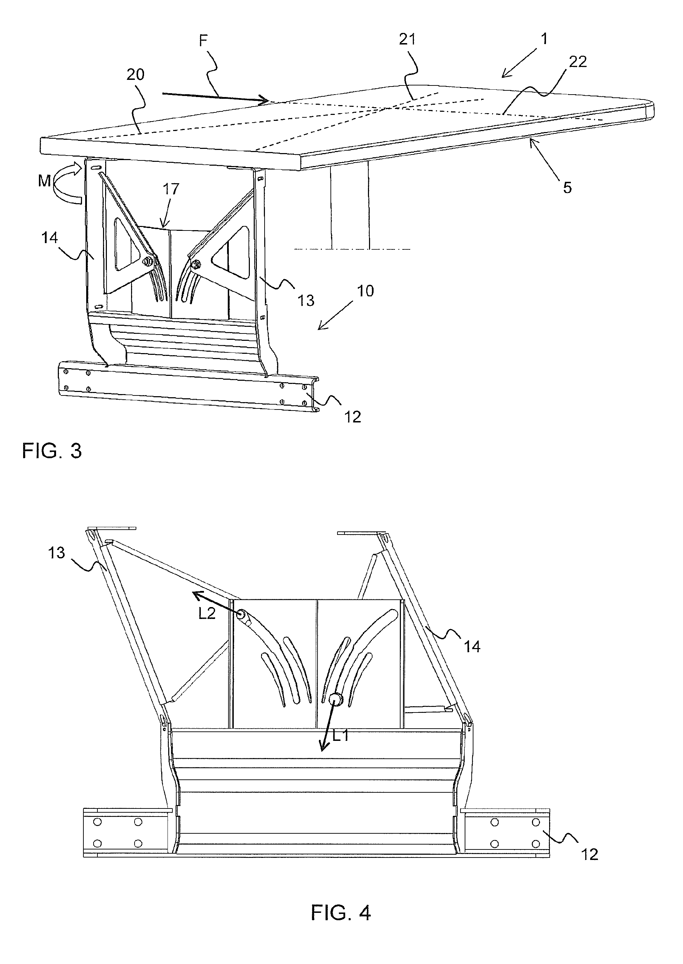

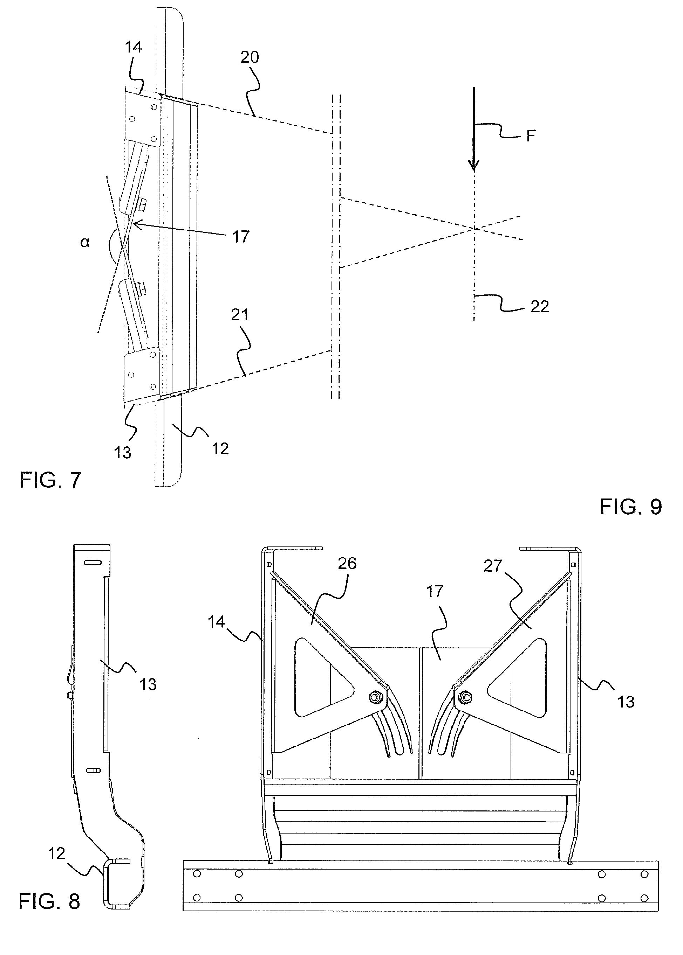

On the basis of Figures 1 and 2 it may be further stated that the fixture 1 of the invention comprises a planar object 5 having an inner end 6 and an outer end 7, opposite to one another, and side edges 8 and 9 interconnecting said ends. This planar object is secured at the inner end 6 to a side wall 3 defining the passenger cabin and being substantially parallel with the travel direction of the vehicle. In that case the securing is provided by an installation means 10, which is arranged substantially below said planar object 5, and which is connected, on one hand, to the planar object and, on the other hand, to a conventional frame structure 11 on the cabin wall or substantially in the vicinity thereof, which frame structure is represented in Figure 2 by a tubular beam. The latter securing point is preferably close to the passenger cabin floor 4 in accordance with the figure. For the operation of the installation means it is essential that between the so-called upper securing, provided in the planar object, and the so-called lower securing, provided in the frame structure, there is a distance that allows the installation means to move in the direction indicated by arrow F in Figures 3 and 7. The movement is also illustrated in Figure 4.

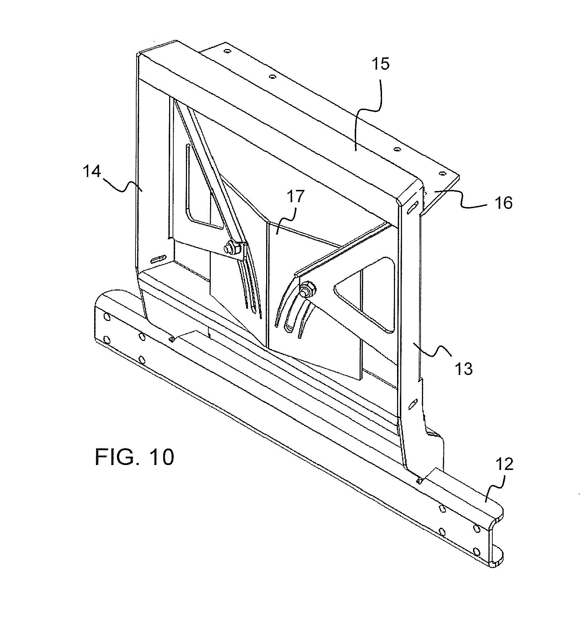

The installation means 10 interconnecting the frame structure 11 and the planar object 5 comprises, in accordance with Figure 3, a support structure whose one side is secured to said frame structure 11 of the side wall 3. The connection may be provided either directly to the frame structure or, as in the figure, indirectly through a lower beam 12 in the installation means 10. As shown in the figure, advantageously at least two substantially parallel, vertical supports 13 and 14 project from the frame structure side of the support structure, the upper ends of the vertical supports being arranged to connect to the planar object 5. This connection may be implemented both by securing the vertical supports directly to the planar object, for instance as in Figure 3, or through an upper beam 15 receiving the planar object. An upper beam of this kind is shown in a particular embodiment of Figure 10. In that case the upper beam may also comprise members 16 for receiving the planar object, which may be, for instance, a separate cantilever protruding from the upper beam.

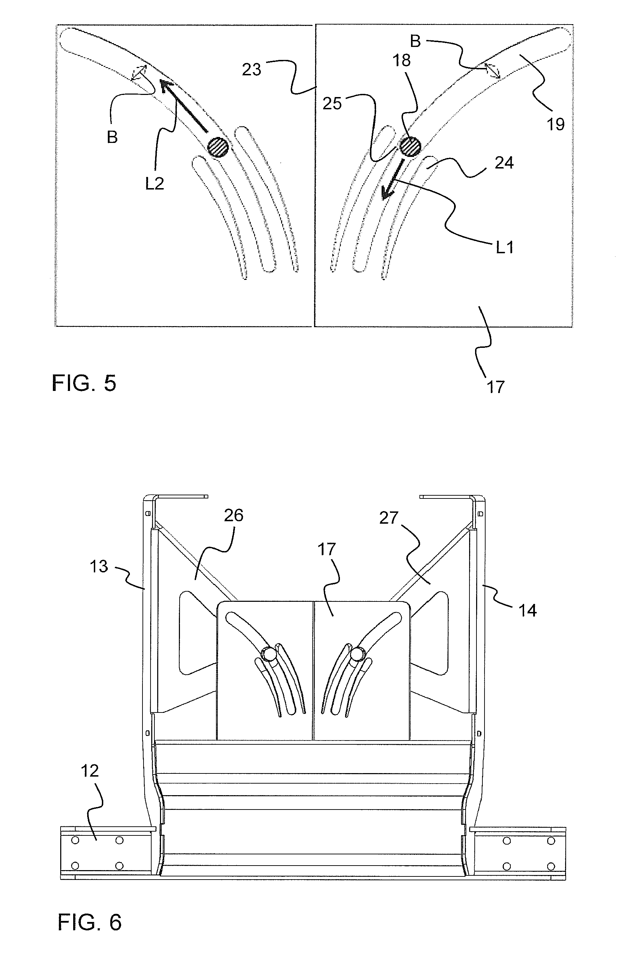

When examining Figures 3 and 5 it also appears that the installation means 10 comprises at least one guide means 17 arranged to be substantially immovable in relation to the side wall 3 of the passenger cabin, the guide means cooperating with the vertical supports 13 and 14 connected to the planar object 5 such that the guide means and the vertical supports are interconnected through so-called slide means. In the present embodiment, these slide means comprise at least two slide pins 18 and at least two, opposing, substantially arcuate guide grooves 19 directed from the planar object towards the frame structure 11 for receiving these slide pins. Thus, the vertices of these opposing guide grooves are located on the edges of the guide means oriented to the vertical supports, the lowest points of the guide grooves being located substantially in the middle of the guide means, close to its lowest edge. Each guide groove is arranged substantially vertically such that the midpoint of the arch formed thereby will be substantially at the securing point of the vertical support on the side of the frame structure.

In its preferred embodiment the axis of symmetry 20 and 21 of the cross section of the vertical support 13 and 14 is arranged to traverse a vertical plane 22 defined by a calculated force effect F substantially at the center line of the planar object. This is to be illustrated in Figures 3 and 7. This is the best possible manner to avoid collapsing of the vertical support by the effect of an impact directed to the fixture 1. On the other hand, in that case it is advantageous to arrange the guide grooves 19 such that the central axis of each guide groove in the guide means 17 is perpendicular to the axis of symmetry of the cross section of the vertical support. This means also that the shape of the guide means is not completely planar, but substantially in the centre thereof there is provided a fold 23 that is vertical in use position. In that case the parts of the guide grooves 19 on the side of the planar object 5 will be further away from the side wall 3 of the passenger cabin than the mutually closest parts of the guide grooves. Because the guide grooves are arranged symmetrically as mirror images of one another in the guide means, an angle of 90 to 180 degrees will be formed therebetween, depending on the length of the planar object. In the present embodiment the angle is approximately 155 degrees, when a distance of force effect from the inner end 6 of the planar object on the side of the side wall 3 is about 1 metre.

In order to illustrate the operation of the arrangement Figure 3 shows a force F acting on the fixture 1 in the vehicle. This may be, for instance, a passenger impacting against the fixture in a collision. Because the force will have a moment arm, which is formed by the distance between the force centre and the vertical support 13 or 14, also a torque M, in addition to the actual perpendicular force, will act on the installation means 10. When the force F exceeds a predetermined limit value, the planar object 5 assumes motion in the acting direction of the force, which is mainly the same as the travel direction V of the vehicle. This, in turn, generates bending in the vertical supports 13 and 14 in the longitudinal direction of the vehicle, as shown in Figure 4. In addition, the torque M generated by the force tends to cause a torsional motion in the planar object, which would detach the planar object from the position close to the side wall 3.

By utilizing the geometric structure of the slide means of the installation means 10 it is possible, however, to transform the torque M into a linear movement and mainly avoid longitudinal torsion of the planar object 5. Thus, the direction of movement of the vertical supports cooperating with the guide means 17 and carrying the planar object will be guided by the cooperation of the guide grooves 19 and the slide pins such that the movement of the vertical support 14 on the side of the force effect F is guided towards the cabin floor 4, as indicated by arrow L1 in Figures 4 and 5, and the movement of the vertical support 13 on the opposite side of the force effect is guided in parallel with the planar object, as indicated by arrow L2 in Figures 4 and 5. The guide grooves being arranged at a slight angle to one another, as described above, the directing of the guide groove 19 on the side of the impact generated by force F towards the side wall 3 in the passenger cabin will produce a torque in the moving planar object 5, which torque counteracts on excessive turning of the outer end of the planar object towards a passenger sitting opposite. Moreover, the mirror-image guide groove, which guides the edge of the planar object opposite the force effect, being directed away from the side wall in the direction of impact propagation, the generation of this counteracting torque is enhanced substantially.

When the lateral edge of the planar object 5 on the side of the force retreats by the effect of the impact, guided by a first guide means 10, slightly obliquely downwards, the opposite lateral edge is prevented from turning by the effect of the motion obliquely downwards. Whereas a second guide means in the table forces the planar object to a motion, which is slightly oblique upwardly, preventing thus the planar object from pressing against the thighs of a passenger sitting on the opposite side.

The main features of the present method, which tend to control deformation caused by an external, sudden force F exerted on a fixture 1, are stated to be the following.

The fixture 1 is installed in a vehicle, in particular in a passenger cabin of the vehicle in a position that is transversal to the travel direction V of the vehicle such that the inner end of the planar object included in the fixture is secured to a side wall 3 that defines the cabin and is substantially parallel with the travel direction of the vehicle. Attachment of this kind is provided by an installation means 10 that is arranged substantially below said planar object 5. The installation means thus interconnects the planar object, on one hand, and a side wall frame structure 11, on the other hand, through a support structure included therein. By arranging two substantially parallel vertical supports 13 and 14 to protrude from the frame structure side of the support structure, the upper ends of which vertical supports are connected to the planar object 5 above the frame structure, it will be possible to control to the installation means 10 the bending taking place in the vertical supports in the longitudinal direction of the vehicle, produced by a force F exceeding a predetermined limit value and acting on the planar object. In the installation means the movement of the vertical supports is controlled to at least one guide means 17 provided therein and arranged substantially immovable in relation to the side wall 3, by arranging at least one vertical support to communicate operationally with the guide means by interconnecting them through slide means. These slide means comprise at least two slide pins 18, which are guided into two guide grooves 19, likewise comprised by the slide means, receiving the slide pins and orienting as mirror images of one another from the planar object 5 towards the cabin floor 4, while the design of the guide groove is able to restrain the movement of the slide pin mechanically and thus to neutralize the transfer movement caused by the force effect on the fixture.

Even though a controlled translational movement of the planar object 5 alone improves passenger safety, it may be further improved by preventing the planar object from bouncing back excessively in an accident. A sudden and forceful bounce back is able to cause added damage to a passenger who has once already impacted against the planar object.

These added damages can be prevented by providing at least one guide groove 19 to mechanically restrain the movement of the slide pin 18, as mentioned above. This may be implemented simply by making the guide groove taper towards the passenger cabin floor 4. Thus, the slide pin, whose cross section is even in thickness, advances in the guide groove and wedges little by little against the walls of the guide groove having a tapering cross section B. In that case the guide groove may taper evenly towards the support frame, or it may taper step by step as in Figures 4 and 5. It appears from Figure 5, for instance, that the cross section B of the guide groove portion above the slide pin is larger than the cross section of the guide groove portion below the slide pin. The guide groove may also be implemented such that it is machined, for instance, in a plate that thickens evenly or stepwise towards the cabin floor, whereby a slide pin has a groove-like necking arranged in the guide groove, which wedges against the plate edge as it advances along the guide groove.

It has also been found advantageous to provide the guide groove 19 with an expansion groove 24 limited at least on one side thereto and substantially parallel with the central axis thereof. These expansion grooves enable deformations in the guide groove resulting from minor forces, whereby it is possible to better avoid tears in the structure surrounding the guide groove and to make sure that the present installation means 10 operates as reliably as possible.

It is also advantageous to provide the guide groove 19 with at least one staggering 25, cf. Figure 5, which is arranged such that the force F resulting from ordinary use and exerted on the planar object 5 does not allow displacement of the planar object. Only a force exceeding a predetermined limit value will be able to provide necessary deformation in the guide groove and to force the slide pin 18 further into the guide groove.

In accordance with the figures, the guide groove 19 is provided in the guide means 17. In accordance with Figure 5, this guide means advantageously comprises two rectangular plate pieces welded together at an angle, or one rectangular plate piece folded substantially in the middle, the fold being either sharp or rounded. In accordance with the figure, the guide means may be connected rigidly to the lower beam 12, or it may be mounted substantially rigidly on the side wall 3, for instance, onto the frame structure 11 therein. The guide grooves are thus formed in the guide means such that they start at the substantially outermost, opposite upper corners curving downwardly towards the lower edge of the guide means, while at the same time approaching the joint/fold 23 and one another. Advantageously half of the guide groove length extending from its upper corner is substantially even in width in cross section B, which allows free movement of the slide pin arranged therein. The groove length after the above-mentioned staggering has cross section which is either even in width, as in Figure 5, but narrower than in the preceding portion, or it may taper towards the lower edge of the guide plate, the cross section being at least slightly smaller than that of the slide pin. The slide pin 18 is thus arranged substantially rigidly to the vertical support 13 and 14. In that case the slide pin is arranged, for instance, in a flange 26 and 27 protruding from the vertical support and comprising a bolt and nut combination, which is prevented from leaving the guide groove while penetrating the fledge and the guide means. When the guide groove is without said staggering 25, the displacement of the planar object caused by the force effect F through ordinary use on the planar object 5 may be prevented such that the bolt and nut combination is tightened lightly against the surface of the guide means.

It is also possible, however, to arrange the guide groove in the flange protruding from the vertical support, and consequently the slide pin is arranged in the guide means, respectively.

It is to be understood that the above description and the relating figures are only intended to illustrate the present arrangement for fastening a planar object to a vehicle. The solution is thus not restricted to the embodiment described above or defined in the claims, but it will be obvious to a person skilled in the art that a variety of variations and modifications are possible within the scope of the inventive idea defined in the accompanying claims.

## Claims

1. An arrangement for installing a fixture (1) in a vehicle, in particular in a passenger cabin of the vehicle, and to a position transversal to the travel direction (V) of the vehicle therein such that
the fixture comprises a planar object (5) having opposing inner and outer ends (6, 7) and lateral edges (8, 9) that interconnect them, whereby
the planar object is secured at the inner end to a side wall (3) defining the passenger cabin and locating substantially parallel with the travel direction of the vehicle,
the securing being provided by an installation means (10) which is arranged substantially below the planar object (5) and connected, on one hand, to the planar object and, on the other hand, to a side wall frame structure (11),
**characterized in that**
the installation means (10) comprises a support structure, one side of which is connected to the frame structure (11), whereby
two substantially parallel vertical supports (13, 14) protrude from the support structure, on the side of the frame structure, and their upper ends connect to the planar object (5) above the frame structure,
the installation means further comprises at least one guide means (17) that is arranged substantially immobile in relation to the side wall (3) and communicates operationally with at least one vertical support (13, 14) through slide means interconnecting them such that
the slide means comprise at least two slide pins (18) and two mirror-image guide grooves (19) receiving them, directing from the planar object (5) towards the cabin floor (4),
the guide groove being formed to mechanically restrain the movement of the slide pin, and
a force effect (F) acting on the planar object and exceeding a predetermined limit value is arranged to make the vertical supports (13, 14) bend in the longitudinal direction of the vehicle.

2. The arrangement of claim 1, **characterized in that** the guide groove (19) is provided in the guide means (17), the slide pin (18) being arranged substantially rigidly in the vertical support (13, 14).

3. The arrangement of claim 2, **characterized in that** the slide pin (18) is arranged to the flange (26, 27) protruding from the vertical support (13, 14).

4. The arrangement of any one of the preceding claims, **characterized in that** the guide groove (19) is provided to taper step by step towards the floor (4) of the passenger cabin.

5. The arrangement of any one of claims 1 to 4, **character**i z e d in that the guide groove (19) is provided to taper evenly towards the floor (4) of the passenger cabin.

6. The arrangement of any one of the preceding claims, **characterized in that** the guide groove (19) comprises one staggering (25) for positioning the planar object (5) to its use position.

7. The arrangement of any one of the preceding claims, **characterized in that** an extension groove (24) adjoins the guide groove (19), at least on one side thereof, the extension groove (24) being substantially parallel with its central axis, so as to enable deformation of the guide groove.

8. The arrangement of any one of the preceding claims, **characterized in that** the central axis in the guide groove (19) is arranged in an oblique position to the travel direction (V) of the vehicle such that the guide groove part on the side of the vertical support (13, 14) is further away from the side wall (3) than the guide groove part further away from the vertical support.

9. The arrangement of claim 8, **characterized in that** the guide grooves (19) are arranged in opposite positions between the vertical supports (13, 14) and therebetween is formed an angle (α) of 90 to 180 degrees.

10. The arrangement of any one of the preceding claims, **characterized in that** the guide groove (19) comprises an arc of a circle.

11. The arrangement of any one of the preceding claims, **characterized in that** the axis of symmetry (20, 21) in the cross section of the vertical support (13, 14) is arranged to traverse a vertical plane (22) defined by the calculated point of action of the force (F) substantially at the centre line of the planar object (5).

12. The arrangement of claim 11, **characterized in that** the guide groove (19) is arranged vertically such that the central axis of the guide groove is arranged to be substantially perpendicular to the axis of symmetry (20, 21) in the cross section of the closest vertical support (13, 14).

13. The arrangement of claim 12, **characterized in that** the guide grooves (19), which are arranged symmetrically as mirror images of one another, form an angle of 90 to 180 degrees between them.

14. A method for controlling deformation caused by a force (F) exerted on a fixture (1), wherein
the fixture (1) is installed in a vehicle, in particular in a passenger cabin of the vehicle, and into a position transversal to the travel direction (V) of the vehicle therein, and
the fixture comprises a planar object (5) having opposing inner and outer ends (6, 7) and lateral edges (8, 9) that interconnect them, whereby
the planar object is secured at the inner end to a side wall (3) defining the passenger cabin and locating substantially parallel with the travel direction of the vehicle such that
the securing thereof is provided by an installation means (10) which is arranged substantially below the planar object (5) and interconnecting, on one hand, the planar object and, on the other hand, a side wall frame structure (11),
**characterized in that**
the installation means (10) comprises a support structure, one side of which is connected to the frame structure (11), whereby
two substantially parallel vertical supports (13, 14) are arranged to protrude from the support structure, on the side of the frame structure, the upper ends of which vertical supports are connected to the planar object (5) above the frame structure, whereby
a force effect (F), acting on the planar object and exceeding a predetermined limit value, makes the vertical supports (13, 14) bend in the longitudinal direction of the vehicle,
the movement of the vertical supports is controlled to the installation means (10) and to at least one guide means (17) provided therein and arranged substantially immovable in relation to the side wall (3), by arranging at least one vertical support (13, 14) to communicate operationally with the guide means by interconnecting them through slide means, whereby
the slide means comprise at least two slide pins (18), which are guided into two mirror-image guide grooves (19) receiving them, directing from the planar object (5) towards the cabin floor (4), while
the design of the guide groove mechanically restrains the movement of the slide pin.

15. The method of claim 14, **characterized in that** the guide grooves (19) are arranged in opposite positions between the vertical supports (13, 14) and therebetween is formed an angle (α) of 90 to 180 degrees.
